# EUROPEAN PATENT APPLICATION

(11) **EP 3 886 499 A1**
(43) Date of publication of application: **29.09.2021**
(21) Application number: 21158967.6
(22) Date of filing: 18.06.2012
(51) Int. Cl.: H04W 36/04, H04W 36/32, H04W 36/14, H04W 36/24, H04W 36/00, H04W 48/12, H04W 48/20, H04W 24/02, H04W 84/04

(54) **METHOD AND APPARATUS FOR CELL CHANGING IN HETEROGENEOUS NETWORK**

(30) Priority: 17.06.2011 CN 201110164411
(62) Divisional of application: 12800854.7
(71) Applicant: HUAWEI TECHNOLOGIES CO., LTD., Shenzhen, Guangdong 518129 (CN)
(72) Inventor: ZHANG, Tao, Shenzhen, Guangdong 518129 (CN); LIN, Bo, Shenzhen, Guangdong 518129 (CN)
(74) Representative: Isarpatent

(57) **Abstract**

Embodiments of the present invention provide a method and an apparatus for cell changing in a heterogeneous network and relate to the field of communications technologies, with an aim to reduce power consumption of a user equipment effectively. The method for cell changing in a heterogeneous network includes: determining a movement state of a user equipment; determining a frequency priority order according to the determined movement state, wherein: when the movement state is a high movement state in which the number of cell changes in a specified time exceeds a first threshold, a priority of a frequency used by a cell with a wide coverage in the heterogeneous network is higher than a priority of a frequency used by a cell with a small coverage; otherwise, a priority of a frequency used by a cell with a wide coverage in the heterogeneous network is lower than a priority of a frequency used by a cell with a small coverage; performing a frequency measurement according to the determined frequency priority order; and performing a cell change according to the frequency priority order and a result of the frequency measurement. The embodiments of the present invention are applicable to mobile communications technologies.

## Description

### CROSS-REFERENCE TO RELATED APPLICATION

This application claims priority to Chinese Patent Application No. 201110164411.0, filed with the Chinese Patent Office on June 17, 2011 and entitled "METHOD AND APPARATUS FOR CELL CHANGING IN HETEROGENEOUS NETWORK", which is incorporated herein by reference in its entirety.

### TECHNICAL FIELD

Embodiments of the present invention relate to communications technologies, and in particular, to a method and an apparatus for cell changing in a heterogeneous network.

### BACKGROUND

With the development of communications technologies, a new form of network deployment, that is, a heterogeneous network (Heterogeneous Network, HetNet), is gradually introduced to radio networks. In a heterogeneous network, a macro base station and a low power node can coexist. A cell of a macro base station has a wide coverage, and may be called a macro cell; and a cell of a low power node has a narrower coverage than a macro cell, and may be called a small cell. The macro cell provides seamless coverage for users, while small cells increase capacity of a network system. In an actual network, a macro cell and a small cell may use the same frequency or different frequencies. A heterogeneous network in which a macro cell and a small cell use different frequencies is called a multi-frequency heterogeneous network, and a heterogeneous network in which a macro cell and a small cell use the same frequency is called a co-frequency heterogeneous network.

When a user equipment (UE, User Equipment) moves in a multi-frequency heterogeneous network, a cell of the user equipment will change. The change of a cell on which an idle user equipment camps is called cell reselection, and the change of a serving cell of a connected user equipment is called handover.

In the prior art, assuming that an idle user equipment moves in a network, a cell reselection is: all cells set the same frequency priority order for different user equipments, and all user equipments in the network preferentially measure and reselect a frequency of a higher priority. However, in this cell reselection method in the prior art, if a frequency priority of a macro cell is set higher than a frequency priority of a small cell, all user equipments in the network will preferentially reselect the macro cell, which is very likely to cause overburden of the macro cell. If a frequency priority of a small cell is set higher than a frequency priority of a macro cell, all user equipments in the network will preferentially reselect the small cell, which greatly relieves the burden of the macro cell. However, because the coverage of a small cell is small, a moving user equipment that reselects a small cell will easily leave the coverage of the small cell and enter the coverage of another small cell or return to the coverage of the macro cell. In this case, the user equipment has to perform cell reselection again. Frequent cell reselections consume much battery energy of the user equipment. In addition, because all small cells in the network together cannot provide seamless coverage, some relatively static user equipments may stay within gaps between the small cells for a long time, where the gaps are within the coverage of the macro cell. If the user equipments always measure the small cells preferentially, the user equipments will measure no small cell in a very long time, and these measurements will waste much battery energy of the user equipments.

### SUMMARY

A main objective of embodiments of the present invention is to provide a method and an apparatus for cell changing in a heterogeneous network, which can effectively reduce power consumption of a user equipment.

To achieve the objective, the embodiments of the present invention adopt the following technical solutions:

In one aspect, an embodiment of the present invention provides a method for cell changing in a heterogeneous network, including:
determining a movement state of a user equipment;
determining a frequency priority order according to the determined movement state, where: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
performing a frequency measurement according to the determined frequency priority order; and
performing a cell change according to the determined frequency priority order and a result of the frequency measurement.

In another aspect, an embodiment of the present invention provides a user equipment, including:
a first determining unit, configured to determine a movement state of the user equipment;
a second determining unit, configured to determine a frequency priority order according to the movement state determined by the first determining unit, where: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
a measuring unit, configured to perform a frequency measurement according to the frequency priority order determined by the second determining unit; and
a processing unit, configured to perform a cell change according to the frequency priority order determined by the second determining unit and a result of the frequency measurement performed by the measuring unit.

According to the method and the user equipment for cell changing in a heterogeneous network that are provided in the embodiments of the present invention, when performing a cell change, the user equipment selects a frequency priority order according to a movement state of a user equipment; when the user equipment is in a high movement state, the user equipment preferentially changes to a cell with a wide coverage, and therefore, when the user equipment moves frequently, the user equipment will not leave the coverage of the cell easily, which effectively reduces the number of cell changes in the heterogeneous network, effectively reduces the power consumption of the user equipment, the network signaling load, and the data transmission delay, and enhances user experience. When the user equipment is in a low movement state, the user equipment preferably changes to a cell with a small coverage, which effectively relieves the load of the cell with a wide coverage and effectively enhances performance of the heterogeneous network.

In another aspect, an embodiment of the present invention provides another method for cell changing in a heterogeneous network, including:
detecting the number of changes of a user equipment to each cell in the heterogeneous network in a specified time;
determining, according to a weight corresponding to each cell and the detected number of changes to each cell, the number of changes of a user equipment in the specified time, where the weight corresponding to each cell is directly proportional to a size of the cell; and
determining a movement state of the user equipment according to the determined number of cell changes; and
performing a cell change according to the determined movement state.

In another aspect, an embodiment of the present invention provides another user equipment, including:
a detecting unit, configured to detect the number of changes of the user equipment to each cell in the heterogeneous network in a specified time;
a first determining unit, configured to determine, according to a weight corresponding to each cell and the number of changes to each cell, which is detected by the detecting unit, the number of cell changes of the user equipment in the specified time, where the weight corresponding to each cell is directly proportional to a size of the cell;
a second determining unit, configured to determine a movement state of the user equipment according to the determined number of cell changes; and
a processing unit, configured to perform a cell change according to the determined movement state.

According to the method and the user equipment for cell changing in a heterogeneous network that are provided in the embodiments of the present invention, the movement state of the user equipment is determined according to the weight corresponding to each cell and the number of changes of the user equipment to each cell, and therefore, in determining the movement state of the user equipment, both the number of cell changes of the user equipment and the sizes of the cells are taken into account. In this way, a true movement state of the user equipment can be reflected more accurately, so that service interruption caused by an early or late cell change is effectively avoided when the cell change is performed according to the movement state of the user equipment.

In still another aspect, an embodiment of the present invention provides another method for cell changing in a heterogeneous network, including:
determining a movement state of a user equipment;
scaling, according to the determined movement state and a size of a target cell for cell changing, a hysteresis used for cell changing; and
performing a cell change according to the scaled hysteresis.

In still another aspect, an embodiment of the present invention provides another user equipment, including:
a determining unit, configured to determine a movement state of the user equipment;
a scaling unit, configured to scale, according to the movement state determined by the determining unit and a size of a target cell for cell changing, a hysteresis used for cell changing; and
a processing unit, configured to perform a cell change according to the hysteresis scaled by the scaling unit.

According to the method and the user equipment for cell changing in a heterogeneous network that are provided in the embodiments of the present invention, the hysteresis used for cell changing is scaled according to the movement state of the user equipment and the size of the target cell for cell changing. Therefore, the scaled hysteresis can be adapted to the movement state of the user equipment and the size of the target cell, so that service interruption caused by an early or late cell change is effectively avoided when the user equipment performs the cell change.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for cell changing in a heterogeneous network according to an embodiment of the present invention;
FIG. 2 is a schematic diagram of a multi-frequency heterogeneous network according to an embodiment of the present invention;
FIG. 3 is a flowchart of a method for cell changing in a heterogeneous network according to an embodiment of the present invention;
FIG. 4 is a flowchart of a method for cell changing in a heterogeneous network according to an embodiment of the present invention;
FIG. 5 is a flowchart of a method for cell changing in a heterogeneous network according to an embodiment of the present invention;
FIG. 6 is a flowchart of a method for cell changing in a heterogeneous network according to an embodiment of the present invention;
FIG. 7 is a structural block diagram of a user equipment according to an embodiment of the present invention;
FIG. 8 is a structural block diagram of a first determining unit of a user equipment according to an embodiment of the present invention;
FIG. 9 is a structural block diagram of a first determining unit of a user equipment according to an embodiment of the present invention;
FIG. 10 is a structural block diagram of a user equipment according to an embodiment of the present invention;
FIG. 11 is a structural block diagram of a processing unit of a user equipment according to an embodiment of the present invention;
FIG. 12 is a structural block diagram of a processing unit of a user equipment according to an embodiment of the present invention;
FIG. 13 is a structural block diagram of a user equipment according to an embodiment of the present invention;
FIG. 14 is a structural block diagram of a first determining unit of a user equipment according to an embodiment of the present invention;
FIG. 15 is a structural block diagram of a user equipment according to an embodiment of the present invention;
FIG. 16 is a structural block diagram of a user equipment according to an embodiment of the present invention;
FIG. 17 is a structural block diagram of a scaling unit of a user equipment according to an embodiment of the present invention;
FIG. 18 is a structural block diagram of a scaling unit of a user equipment according to an embodiment of the present invention; and
FIG. 19 is a structural block diagram of a scaling unit of a user equipment according to an embodiment of the present invention.

### DESCRIPTION OF EMBODIMENTS

The following clearly and completely describes the technical solutions in the embodiments of the present invention with reference to the accompanying drawings in the embodiments of the present invention.

Apparently, the embodiments in the following description are merely a part rather than all of the embodiments of the present invention. All other embodiments obtained by a person of ordinary skill in the art based on the embodiments of the present invention without creative efforts shall fall within the protection scope of the present invention.

It should be noted that, the embodiments of the present invention are preferably applicable to multi-frequency heterogeneous networks, and definitely, are also applicable to co-frequency heterogeneous networks, which is not limited in the present invention. In the following embodiments, a multi-frequency heterogeneous network is taken as an example for description.

In addition, a cell change in the embodiments of the present invention refers to a cell handover or cell reselection performed by a user equipment.

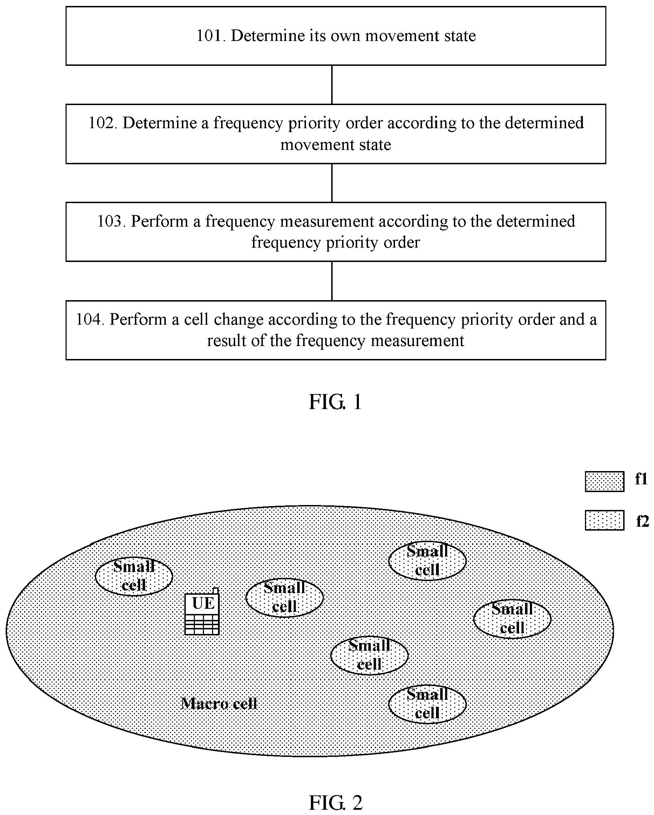

As shown in FIG. 1, an embodiment of the present invention provides a method for cell changing in a heterogeneous network. Based on a user equipment, the method includes the following steps:

101. Determine a movement state of a user equipment.

In the embodiment of the present invention, multiple frequency priority orders are set in a heterogeneous network, each frequency priority order corresponds to one or several movement states of the user equipment, and, before performing a cell change, the user equipment determines a movement state of a user equipment first, and therefore, a frequency priority order used for cell changing is determined according to the movement state of the user equipment, and a frequency priority order used by the user equipment may vary with the movement state of the user equipment.

Optionally, the criteria for determining a movement state of a user equipment may be that:
the user equipment enters a high movement state if the number of cell changes of the user equipment in a specified time t1 is greater than a first threshold n1; and
the user equipment enters a low movement state if the number of cell changes of the user equipment in the specified time t1 is less than a second threshold n2.

Optionally, the criteria for determining a movement state of a user equipment may also be that:
the user equipment enters a high movement state if the number of cell changes of the user equipment in a specified time t1 is greater than a first threshold n1;
the user equipment enters a medium movement state if the number of cell changes of the user equipment in the specified time t1 is less than the first threshold n1 but greater than a second threshold n2; and
the user equipment enters a normal movement state if the user equipment does not meet the criteria of the high movement state or the medium movement state throughout a specified time t2.

Definitely, understandably, the criteria of determining a movement state of a user equipment are not limited, and the user equipment may include other movement states, which are not limited in the present invention.

It should be noted that, in the embodiment of the present invention, the high movement state is termed relative to the low movement state; in the same time period, the number of cell changes of a user equipment in a high movement state is higher than the number of cell changes of a user equipment in a low movement state.

The number of cell changes refers to the total number of cell changes performed by the user equipment in the specified time t1. For example, FIG. 2 is a schematic diagram of a multi-frequency heterogeneous network according to an embodiment of the present invention, where the network includes a macro cell and several small cells, a frequency used by the macro cell is f1, and a frequency used by the small cells is f2. It is assumed that in the time t1, the number of reselections of the macro cell by the user equipment, that is, the number of times that the user equipment reselects the macro cell, is N1, and the number of reselections of a small cell by the user equipment, that is, the number of times that the user equipment reselects the small cell, is N2. In this case, the number of cell changes of the user equipment in t1, that is, the total number of cell reselections, is N1+N2, and the user equipment can determine a movement state of a user equipment according to the value of N1+N2.

Evidently, a true movement state of the user equipment depends not only on the number of cell changes performed by the user equipment in the specified time, but also on a size of a target cell at the time of cell changing. If the user equipment reselects small cells frequently in t1, although the number of reselections is large, the user equipment is not necessarily in the high movement state because the coverage of a small cell is small. Therefore, to improve accuracy in determining the movement state in this step, before step 101, the method for cell changing in the embodiment of the present invention may further include:
obtaining, by the user equipment, a weight corresponding to each cell in the heterogeneous network, where the weight corresponding to the cell is directly proportional to a size of the cell. For example, if a size of a large cell is tenfold a size of a small cell, a weight corresponding to the large cell is 1 and a weight corresponding to the small cell is 0.1. The value of the weight corresponding to each cell preferably ranges from 0 to 1.

In this case, step 101 may include the following substeps:

First, detect the number of changes of the user equipment to each cell in the heterogeneous network in a specified time.

Then, determine, according to a weight corresponding to each cell and the detected number of changes to each cell, the number of cell changes of the user equipment in the specified time.

Still taking the heterogeneous network shown in FIG. 2 as an example, assume that a weight corresponding to the macro cell is W1 and a weight corresponding to a small cell is W2, and in the time t1, the number of reselections of the macro cell by the user equipment, that is, the number of times that the user equipment reselects the macro cell, is N1, and the number of reselections of a small cell by the user equipment, that is, the number of times that the user equipment reselects the small cell, is N2. In this case, the number of cell changes in t1, that is, the total number of cell reselections, is N1×W1+N2×W2, and the user equipment can determine a movement state of a user equipment according to the value of N1×W1+N2×W2.

Optionally, in this step, the user equipment may determine, according to the weight corresponding to each cell, the detected number of changes to each cell, and a cell type of the target cell, the number of its own cell changes in the specified time, where the cell type of the target cell is defined by the coverage of the cell, for example, the cell type of the target cell is a macro cell or a small cell.

In this case, still taking the heterogeneous network shown in FIG. 2 as an example, assuming that, in a time t, the number of changes of the user equipment to the macro cell is N1, the weight corresponding to the macro cell is W1, the number of changes of the user equipment to the small cells is N2, and the weight corresponding to a small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

Then, the movement state of the user equipment is determined according to the determined number of cell changes.

In the manner of determining the movement state of the user equipment in the above step 101, both the number of cell changes of the user equipment in the specified time and the sizes of the cells are taken into account, and therefore, the movement state of the user equipment can be reflected more accurately, and accuracy of the movement state of the user equipment determined by the user equipment in this step is effectively improved.

Specifically, the user equipment may receive a system message of each cell in the heterogeneous network, where the system message of each cell carries the weight corresponding to the cell, and obtain the weight corresponding to each cell in the heterogeneous network according to the system message of each cell in the heterogeneous network. The user equipment may also receive a dedicated message of each cell in the heterogeneous network, where the dedicated message of each cell carries the weight corresponding to the cell, and obtain the weight corresponding to each cell in the heterogeneous network according to the dedicated message of each cell in the heterogeneous network. Alternatively, the user equipment may pre-store weight information corresponding to each cell in the heterogeneous network, and obtain the weight corresponding to each cell in the heterogeneous network according to the pre-stored weight information. Definitely, the user equipment may also obtain the weight corresponding to each cell in other manners, which is not limited in the present invention.

102. Determine a frequency priority order according to the determined movement state.

In the embodiment of the present invention, each priority order corresponds to a user equipment movement state, where: in a frequency priority order corresponding to a high movement state in which the number of cell changes in a specified time is higher than a first threshold, a priority of a frequency used by a cell with a wide coverage in the heterogeneous network is higher than a priority of a frequency used by a cell with a small coverage; in contrast, in a frequency priority order corresponding to a low movement state in which the number of cell changes in a specified time is lower than a second threshold, a priority of a frequency used by a cell with a wide coverage in the heterogeneous network is lower than a priority of a frequency used by the cell with a small coverage.

Still taking the heterogeneous network shown in FIG. 2 as an example, in the high movement state, a priority of the frequency f1 used by the macro cell is higher than a priority of the frequency f2 used by the small cells; and in the low movement state, the priority of the frequency f1 used by the macro cell is lower than the priority of the frequency f2 used by the small cells.

In this way, when the user equipment is in the high movement state, the user equipment will preferentially change to the macro cell, and therefore, when the user equipment moves frequently, the user equipment will not leave the coverage of the macro cell easily, which effectively reduces the number of cell changes, effectively reduces the power consumption of the user equipment, the network signaling load, and the data transmission delay, and enhances user experience. When the user equipment is in the low movement state, the user equipment will preferentially change to a small cell, which effectively relieves the load of the cell with a wide coverage and effectively enhances performance of the heterogeneous network.

Obviously, before this step, the user equipment needs to obtain the frequency priority order corresponding to each movement state of the user equipment. Specifically, the user equipment may receive a system message delivered by each cell in the heterogeneous network, where the system message carries frequency priority order information corresponding to each movement state; and obtain the frequency priority order corresponding to each movement state according to the system message. The user equipment may also receive a dedicated message delivered by each cell in the heterogeneous network, where the dedicated message carries frequency priority order information corresponding to each movement state; and obtain the frequency priority order corresponding to each movement state according to the dedicated message. In addition, the user equipment may pre-store the frequency priority order information corresponding to each movement state, and the user equipment can obtain the frequency priority order corresponding to each movement state according to the pre-stored frequency priority order information. Definitely, the user equipment may also obtain the frequency priority order corresponding to each movement state of the user equipment in other manners, which is not limited in the present invention.

103. Perform a frequency measurement according to the determined frequency priority order.

Optionally, the user equipment may perform the frequency measurement in the following manners:
if signal strength or signal quality of a current serving cell is greater than a first demarcation, measuring at least one high-priority frequency in the heterogeneous network at intervals of a first specified time; and
if the signal strength or the signal quality of the current serving cell is less than the first demarcation, measuring all frequencies in the heterogeneous network at intervals of the first specified time.

When the user equipment is in a low movement state, such as a static state, the user equipment may stay in gaps between the small cells for long. If the user equipments always measure the small cells preferentially, the user equipments will measure no small cell in a very long time, and these measurements will waste much battery energy of the user equipment.

Therefore, in this step, preferably, the user equipment may perform the frequency measurement according to the frequency priority order determined in step 102 and its own movement state determined in step 101.

Optionally, when the movement state of the user equipment is the high movement state in which the number of cell changes in the specified time exceeds the first threshold, the frequency measurement may be performed in the foregoing manner, that is:
if signal strength or signal quality of a current serving cell is greater than a first demarcation, measuring at least one high-priority frequency in the heterogeneous network at intervals of a first specified time; and
if the signal strength or the signal quality of the current serving cell is less than the first demarcation, measuring all frequencies in the heterogeneous network at intervals of the first specified time.

Optionally, when the movement state of the user equipment is the low movement state in which the number of cell changes in the specified time is lower than the second threshold, the user equipment may perform the frequency measurement in the following manner:
if signal strength or signal quality of a current serving cell is greater than a first demarcation,
measuring at least one high-priority frequency in the heterogeneous network at intervals of a first specified time; and
if no cell is found at the at least one high-priority frequency in a second specified time, measuring the at least one high-priority frequency at intervals of a third specified time; and
after at least one cell is found at the at least one high-priority frequency, measuring the at least one high-priority frequency at intervals of the first specified time,
where, the second specified time is greater than or equal to the first specified time, and the third specified time is greater than the first specified time, for example, the third specified time is fourfold the first specified time.

If no cell is found in the second specified time, it indicates that the user equipment may stay in a gap between the small cells at this time, and probably no cell will be found even if the user equipment performs the frequency measurement continually at intervals of the first specified time. In this case, a measurement time interval is increased from the first specified time to the third specified time, and, when a cell can be searched out, the measurement time interval is increased to the first specified time, which effectively reduces the number of frequency measurements performed by the user equipment, significantly improves the efficiency of the frequency measurement, and effectively saves battery energy of the user equipment.

104. Perform a cell change according to the frequency priority order and a result of the frequency measurement.

In this step, specifically, when performing the cell change, the user equipment selects a scaling factor corresponding to a current movement state of the user equipment according to a movement state of a user equipment, and scales a relevant hysteresis used for cell reselection or handover, so that the cell reselection speed or handover speed of the user equipment matches its movement speed, and then the user equipment performs the cell change according to the frequency priority order, the result of the frequency measurement, and the scaled relevant hysteresis. The relevant hysteresis includes TimeToTrigger, Q_{hyst}, T_{reselectionEUTRA}, T_{reselectionRAT}, or the like.

If the same hysteresis is used regardless of the cell size, the following problem may arise: a hysteresis suitable for a large cell may be too big for a small cell, which results in a late reselection or handover and further leads to service interruption; and, a hysteresis suitable for a small cell may be too small for a large cell, which results in an early reselection or handover and further leads to ping-pong reselection or handover.

To effectively avoid the problem of early or late cell changes of the user equipment in the heterogeneous network, in an embodiment of the present invention, optionally, the user equipment in the heterogeneous network may use two sets of scaling factors to scale the hysteresis, respectively. The two sets of scaling factors correspond to the size of the target cell and the movement state of the user equipment, respectively. For example,
a first set of scaling factors: macro cell--sf3, small cell--sf4, ...; and
a second set of scaling factors: high movement state--sf1, medium movement state--sf2, ....

The two sets of scaling factors may be sent by the network to the user equipment through a system message or a dedicated message, or pre-stored by the user equipment.

In this case, in this step, the user equipment will determine a first scaling factor among the first set of scaling factors according to the cell size of the target cell for cell changing, and determine a second scaling factor among the second set of scaling factors according to the determined movement state;
then, scale, according to the determined first scaling factor and second scaling factor, a hysteresis used for cell changing; and
then, perform the cell change according to the frequency priority order, the result of the frequency measurement, and the scaled hysteresis.

For example, if the current movement state of the user equipment is the high movement state and the target cell is the macro cell, the scaled hysteresis = an original hysteresis × sf1 × sf3.

In this way, both the problem of the cell size and the movement state of the user equipment are taken into account, and therefore, the scaled hysteresis is more accurate, which effectively avoids the problem of early or late cell changes of the user equipment in the heterogeneous network.

To effectively avoid the problem of early or late cell changes of the user equipment in the heterogeneous network, in another embodiment of the present invention, the current serving cell of the user equipment determines sizes of possible target cells for a next reselection or handover of the user equipment, determines a hysteresis specific to each target cell according to the sizes of the possible target cells, and sends the hysteresis to the user equipment. The user equipment receives the hysteresis sent by the current serving cell and used for cell changing, and determines a scaling factor according to a movement state of a user equipment, and then scales the received hysteresis according to the determined scaling factor; then, performs cell reselection or handover, that is, performs the cell change, according to the frequency priority order, the result of the frequency measurement, and the scaled hysteresis.

Similarly, in this way, both the problem of the cell size and the movement state of the user equipment are taken into account, and therefore, the scaled hysteresis is more accurate, which effectively avoids the problem of early or late cell changes of the user equipment in the heterogeneous network.

To effectively avoid the problem of early or late cell changes of the user equipment in the heterogeneous network, in another embodiment of the present invention, the current serving cell of the user equipment broadcasts multiple hystereses in the system message, where each hysteresis corresponds to a cell size. The user equipment receives the multiple hystereses broadcast by the current serving cell. The user equipment determines a size of a possible target cell for a next reselection or handover, and determines a hysteresis corresponding to the possible target cell among the received multiple hystereses according to the size of the possible target cell; and the user equipment determines a scaling factor according to the determined movement state. The determining the scaling factor and the determining the hysteresis of the target cell are not limited to any particular order, and may be performed simultaneously or successively. Then, the user equipment scales the determined hysteresis according to the determined scaling factor.

Similarly, in this way, both the size of the target cell and the movement state of the user equipment are taken into account, and therefore, the scaled hysteresis is more accurate, which effectively avoids the problem of early or late cell changes of the user equipment in the heterogeneous network.

According to the method for cell changing in a heterogeneous network that is provided in the embodiment of the present invention, when performing a cell change, the user equipment selects a frequency priority order according to a movement state of a user equipment; when the user equipment is in a high movement state, the user equipment preferentially changes to a cell with a wide coverage, and therefore, when the user equipment moves frequently, the user equipment will not leave the coverage of the cell easily, which effectively reduces the number of cell changes in the heterogeneous network, effectively reduces the power consumption of the user equipment, the network signaling load, and the data transmission delay, and enhances user experience. When the user equipment is in a low movement state, the user equipment preferentially changes to a cell with a small coverage, which effectively relieves the load of the cell with a wide coverage and effectively enhances performance of the heterogeneous network. Meanwhile, the number of frequency measurements can be reduced effectively, the efficiency of frequency measurement is improved, which further reduces the power consumption of the user equipment, and effectively avoids the problem of early or late cell changes of the user equipment in the heterogeneous network.

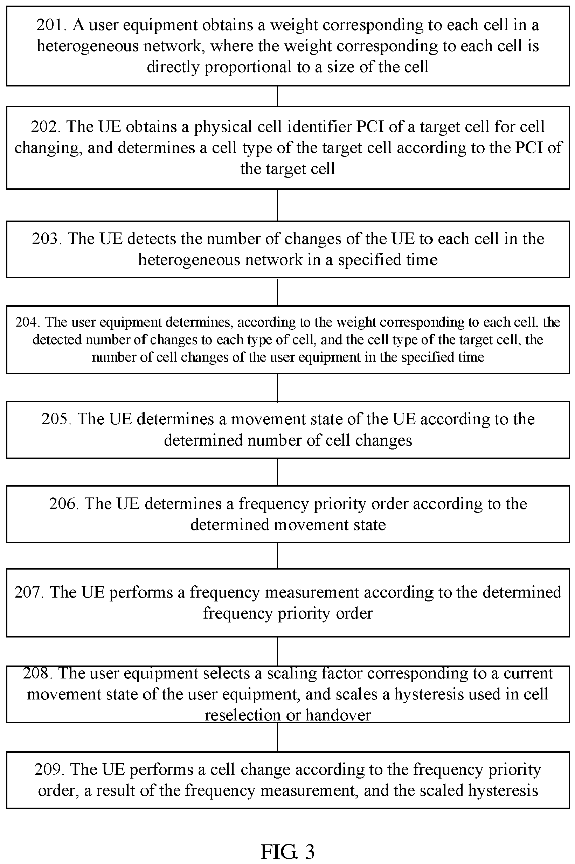

FIG. 3 is a specific embodiment of a method for cell changing in a heterogeneous network according to embodiments of the present invention. This embodiment includes the following:

201. A user equipment obtains a weight corresponding to each cell in a heterogeneous network, where the weight corresponding to each cell is directly proportional to a size of the cell.

202. Optionally, the user equipment obtains a physical cell identifier PCI (Physical Cell Identity, physical cell identifier) of a target cell for cell changing, and determines a cell type of the target cell according to the PCI of the target cell.

Before this step, the user equipment needs to obtain a mapping relationship between cell types and physical cell identifiers. In this embodiment, optionally, each cell broadcasts one or more PCI (Physical Cell Identity, physical cell identifier) intervals in a system message. Each PCI interval corresponds to a cell type, and a cell type indicates a size of a cell. For example, a PCI interval of a small cell is [PCI1, PCI2], and a PCI interval of a macro cell is [PCI3, PCI4]. Through the system message, the user equipment can obtain the PCI intervals and the cell types corresponding to the PCI intervals, that is, obtain the mapping relationship between the cell types and the physical cell identifiers, thereby determining the cell type of the target cell according to the mapping relationship and the PCI of the target cell. For example, if the PCI of the target cell is in a PCI interval of a small cell, the target cell is a small cell; and, if the PCI of the target cell is in a PCI interval of a macro cell, the target cell is a macro cell.

Definitely, each cell may also send the PCI intervals and the cell types corresponding to the PCI intervals to the user equipment through a dedicated message, and the PCI intervals and the cell types corresponding to the PCI intervals may also be preset in the user equipment, which is not limited in this embodiment.

203. The user equipment detects the number of changes of the user equipment to each cell in the heterogeneous network in a specified time.

It should be noted that, steps 203, 202, and 201 are not limited to any particular order, and may be performed concurrently or successively.

204. The user equipment determines, according to the weight corresponding to each cell, the detected number of changes to each type of cell, and the cell type of the target cell, the number of cell changes of the user equipment in the specified time.

For example, assuming that, in a time t, the number of changes of the user equipment to the macro cell is N1, a weight corresponding to the macro cell is W1, the number of changes of the user equipment to the small cells is N2, and a weight corresponding to the small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

205. The user equipment determines a movement state of a user equipment according to the determined number of cell changes.

206. The user equipment determines a frequency priority order according to the determined movement state.

Specifically, when the user equipment is in a high movement state, a priority of a frequency used by the macro cell is higher than a priority of a frequency used by the small cells; otherwise, a priority of a frequency used by the macro cell is lower than a priority of a frequency used by the small cells.

207. The user equipment performs a frequency measurement according to the determined frequency priority order.

208. The user equipment selects a scaling factor corresponding to a current movement state of the user equipment, and scales a hysteresis used in cell reselection or handover.

209. The user equipment performs a cell change according to the frequency priority order, a result of the frequency measurement, and the scaled hysteresis.

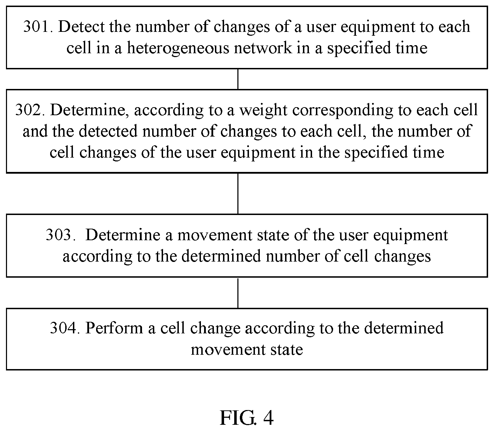

As shown in FIG. 4, an embodiment of the present invention provides another method for cell changing in a heterogeneous network. Based on a user equipment, the method includes the following steps:

301. Detect the number of changes of a user equipment to each cell in a heterogeneous network in a specified time.

The number of changes of the user equipment to each cell in the specified time is the number of times that the user equipment changes to the cell in the specified time.

302. Determine, according to a weight corresponding to each cell and the detected number of changes to each cell, the number of cell changes of the user equipment in the specified time.

The weight corresponding to each cell is directly proportional to a size of the cell. For example, if a size of a large cell is tenfold a size of a small cell, a weight corresponding to the large cell is 1 and a weight corresponding to the small cell is 0.1. The value of the weight corresponding to each cell preferably ranges from 0 to 1.

Taking the heterogeneous network shown in FIG. 2 as an example, assume that a weight corresponding to the macro cell is W1 and a weight corresponding to a small cell is W2, and in a time t1, the number of reselections of the macro cell by the user equipment, that is, the number of times that the user equipment reselects the macro cell, is N1, and the number of reselections of a small cell by the user equipment, that is, the number of times that the user equipment reselects the small cell, is N2. In this case, the number of cell changes in t1, that is, the total number of cell reselections, is N1×W1+N2×W2, and the user equipment can determine a movement state of a user equipment according to the value of N1×W1+N2×W2.

Optionally, in this step, the user equipment may determine, according to the weight corresponding to each cell, the detected number of changes to each cell, and a cell type of a target cell, the number of its own cell changes in the specified time, where the cell type of the target cell is defined by the coverage of the cell, for example, the cell type of the target cell is a macro cell or a small cell.

In this case, still taking the heterogeneous network shown in FIG. 2 as an example, assuming that, in a time t, the number of changes of the user equipment to the macro cell is N1, the weight corresponding to the macro cell is W1, the number of changes of the user equipment to the small cells is N2, and the weight corresponding to a small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

Understandably, before this step, the user equipment needs to obtain the weight corresponding to each cell in the heterogeneous network. Specifically, the user equipment may receive a system message of each cell in the heterogeneous network, where the system message of each cell carries the weight corresponding to the cell, and obtain the weight corresponding to each cell in the heterogeneous network according to the system message of each cell in the heterogeneous network. The user equipment may also receive a dedicated message of each cell in the heterogeneous network, where the dedicated message of each cell carries the weight corresponding to the cell, and obtain the weight corresponding to each cell in the heterogeneous network according to the dedicated message of each cell in the heterogeneous network. In addition, the user equipment may pre-store weight information corresponding to each cell in the heterogeneous network, and obtain the weight corresponding to each cell in the heterogeneous network according to the pre-stored weight information. Definitely, the user equipment may also obtain the weight corresponding to each cell in other manners, which is not limited in the present invention.

Such a method for determining the number of cell changes takes both the number of cell changes in the specified time and the sizes of the cells into account, and therefore, a true movement state of the user equipment can be determined accurately.

303. Determine a movement state of the user equipment according to the determined number of cell changes.

Optionally, movement states of the user equipment include:
a high movement state in which the number of cell changes in a specified time t1 is greater than a first threshold n1, and a low movement state in which the number of cell changes in a specified time t1 is less than a second threshold n2, and other movement states, which is not limited in the present invention.

304. Perform a cell change according to the determined movement state.

In this step, specifically, when performing the cell change, the user equipment selects a scaling factor corresponding to a current movement state of the user equipment according to a movement state of a user equipment, and scales a relevant hysteresis used for cell reselection or handover, so that the cell reselection speed or handover speed of the user equipment matches its movement speed, and then the user equipment performs the cell change according to the scaled relevant hysteresis. The relevant hysteresis includes TimeToTrigger, Q_{hyst}, T_{reselectionEUTRA}, T_{reselectionRAT}, or the like. In steps 302 and 303, the movement state of the user equipment is determined accurately according to the weight corresponding to each cell and the number of changes of the user equipment to each cell, and therefore, in this step, an accurate scaling factor can be selected according to the determined movement state, so that service interruption caused by an early or late cell change is effectively avoided.

According to the method for cell changing in a heterogeneous network that is provided in the embodiment of the present invention, the movement state of the user equipment is determined according to the weight corresponding to each cell and the number of changes of the user equipment to each cell, and therefore, in determining the movement state of the user equipment, both the number of cell changes of the user equipment and the size of the target cell are taken into account. In this way, a true movement state of the user equipment can be reflected more accurately, so that service interruption caused by an early or late cell change is effectively avoided when the cell change is performed according to the movement state of the user equipment.

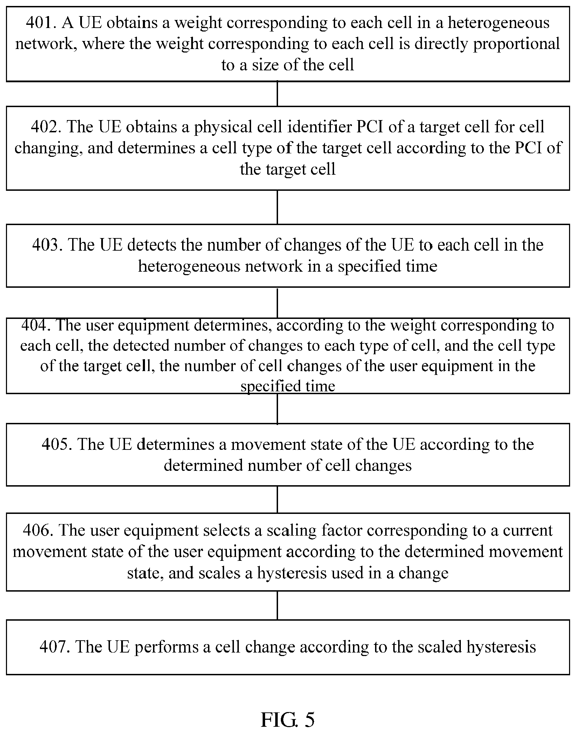

FIG. 5 is a specific embodiment of a method for cell changing in a heterogeneous network according to embodiments of the present invention. This embodiment includes the following:

401. A user equipment obtains a weight corresponding to each cell in a heterogeneous network, where the weight corresponding to each cell is directly proportional to a size of the cell.

402. Optionally, the user equipment obtains a physical cell identifier PCI of a target cell for cell changing, and determines a cell type of the target cell according to the PCI of the target cell.

Before this step, the user equipment needs to obtain a mapping relationship between cell types and physical cell identifiers. In this embodiment, optionally, each cell broadcasts one or more PCI intervals in a system message. Each PCI interval corresponds to a cell type, and a cell type indicates a size of a cell. For example, a PCI interval of a small cell is [PCI1, PCI2], and a PCI interval of a macro cell is [PCI3, PCI4]. Through the system message, the user equipment can obtain the PCI intervals and the cell types corresponding to the PCI intervals, that is, obtain the mapping relationship between the cell types and the physical cell identifiers, thereby determining the cell type of the target cell according to the mapping relationship and the PCI of the target cell. For example, if the PCI of the target cell is in a PCI interval of a small cell, the target cell is a small cell; and, if the PCI of the target cell is in a PCI interval of a macro cell, the target cell is a macro cell.

Definitely, each cell may also send the PCI intervals and the cell types corresponding to the PCI intervals to the user equipment through a dedicated message, and the PCI intervals and the cell types corresponding to the PCI intervals may also be preset in the user equipment, which is not limited in this embodiment.

403. The user equipment detects the number of changes of the user equipment to each cell in the heterogeneous network in a specified time.

It should be noted that, steps 403, 402, and 401 are not limited to any particular order, and may be performed concurrently or successively.

404. The user equipment determines, according to the weight corresponding to each cell, the detected number of changes to each type of cell, and the cell type of the target cell, the number of cell changes of the user equipment in the specified time.

For example, assuming that, in a time t, the number of changes of the user equipment to the macro cell is N1, a weight corresponding to the macro cell is W1, the number of changes of the user equipment to the small cells is N2, and a weight corresponding to the small cell is W2,
when the target cell is the macro cell, the number of cell changes of the user equipment in the time t equals N1 + N2 × W2/W1; and
when the target cell is a small cell, the number of cell changes of the user equipment in the time t equals N1 × W1/W2 + N2.

405. The user equipment determines a movement state of a user equipment according to the determined number of cell changes.

406. The user equipment selects a scaling factor corresponding to a current movement state of the user equipment according to the determined movement state, and scales a hysteresis used for cell changing.

407. The user equipment performs a cell change according to the scaled hysteresis.

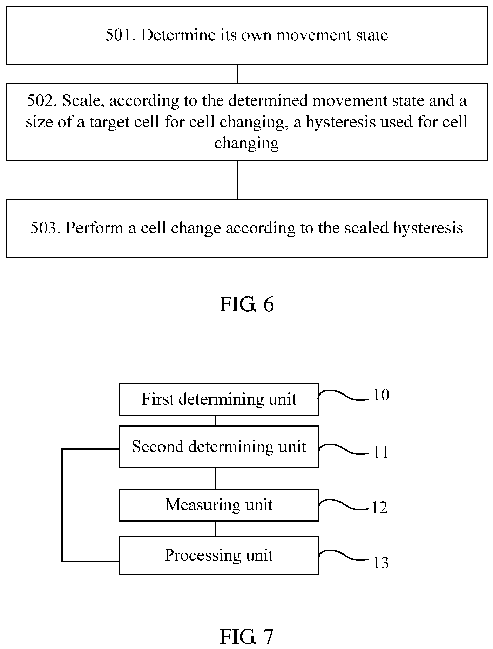

As shown in FIG. 6, an embodiment of the present invention provides another method for cell changing in a heterogeneous network. Based on a user equipment, the method includes the following steps:

501. Determine a movement state of the user equipment.

Specifically, in this step, the method for determining the movement state of the user equipment in the preceding embodiment of the present invention may be adopted, or a method for determining the movement state of the user equipment in the prior art may be adopted, which is not limited in the present invention.

502. Scale, according to the determined movement state and a size of a target cell for cell changing, a hysteresis used for cell changing.

When performing a cell change, the user equipment selects a scaling factor corresponding to a current movement state of the user equipment according to a movement state of a user equipment, and scales a relevant hysteresis used for cell reselection or handover, so that the cell reselection speed or handover speed of the user equipment matches its movement speed, and then the user equipment performs the cell change according to the scaled relevant hysteresis. The relevant hysteresis includes TimeToTrigger, Q_{hyst}, T_{reselectionEUTRA}, T_{reselectionRAT}, or the like.

If the same hysteresis is used regardless of the size of the target cell for cell changing, the following problem may arise: a hysteresis suitable for a large cell may be too big for a small cell, which results in a late reselection or handover and further leads to service interruption; and, a hysteresis suitable for a small cell may be too small for a large cell, which results in an early reselection or handover and further leads to ping-pong reselection or handover.

Therefore, to effectively avoid the problem of early or late cell changes of the user equipment in the heterogeneous network, in this step, the user equipment scales, according to the determined movement state and the size of the target cell for cell changing, the hysteresis used for cell changing.

Optionally, in an embodiment of the present invention, the user equipment may use two sets of scaling factors to scale the hysteresis, respectively. The two sets of scaling factors correspond to the size of the target cell and the movement state of the user equipment, respectively. For example,
a first set of scaling factors: macro cell--sf3, small cell--sf4, ...; and
a second set of scaling factors: high movement state--sf1, medium movement state--sf2, ....

The two sets of scaling factors may be sent by the network to the user equipment through a system message or a dedicated message, or pre-stored by the user equipment.

In this case, in this step, the user equipment will determine a first scaling factor among the first set of scaling factors according to the size of the target cell for cell changing, and determine a second scaling factor among the second set of scaling factors according to the determined movement state. The determining the first scaling factor and the determining the second scaling factor by the user equipment are not limited to any particular order, and may be performed simultaneously or successively. Then, the user equipment scales, according to the determined first scaling factor and second scaling factor, the hysteresis used for cell changing.

For example, if the current movement state of the user equipment is the high movement state and the target cell is the macro cell, the scaled hysteresis = an original hysteresis × sf1 × sf3.

In this way, both the size of the target cell and the movement state of the user equipment are taken into account, and therefore, the scaled hysteresis is more accurate, which effectively avoids the problem of early or late cell changes of the user equipment in the heterogeneous network.

Optionally, in another embodiment of the present invention, a current serving cell of the user equipment determines sizes of possible target cells for a next reselection or handover of the user equipment, determines a hysteresis specific to each target cell according to the sizes of the possible target cells, and sends the hysteresis to the user equipment. That is to say, the user equipment receives the hysteresis sent by the current serving cell and used for cell changing, where the hysteresis is obtained by the serving cell according to the size of the target cell used for cell changing, and the user equipment determines a scaling factor according to the determined movement state. The determining the scaling factor and the receiving the hysteresis of the current serving cell are not limited to any particular order, and may be performed simultaneously or successively. Then, the user equipment scales the received hysteresis according to the determined scaling factor.

Similarly, in this way, both the size of the target cell and the movement state of the user equipment are taken into account, and therefore, the scaled hysteresis is more accurate, which effectively avoids the problem of early or late cell changes of the user equipment in the heterogeneous network.

Optionally, in another embodiment of the present invention, the current serving cell of the user equipment broadcasts multiple hystereses in the system message, where each hysteresis corresponds to a cell size. The user equipment receives the multiple hystereses broadcast by the current serving cell. The user equipment determines a size of a possible target cell for a next reselection or handover, and determines a hysteresis corresponding to the possible target cell among the received multiple hystereses according to the size of the possible target cell; and the user equipment determines a scaling factor according to the determined movement state. The determining the scaling factor and the determining the hysteresis of the target cell are not limited to any particular order, and may be performed simultaneously or successively. Then, the user equipment scales the determined hysteresis according to the determined scaling factor.

Similarly, in this way, both the size of the target cell and the movement state of the user equipment are taken into account, and therefore, the scaled hysteresis is more accurate, which effectively avoids the problem of early or late cell changes of the user equipment in the heterogeneous network.

503. Perform a cell change according to the scaled hysteresis.

According to the method for cell changing in a heterogeneous network that is provided in the embodiment of the present invention, the hysteresis used for cell changing is scaled according to the movement state of the user equipment and the size of the target cell for cell changing. Therefore, the scaled hysteresis can be adapted to the movement state of the user equipment and the size of the target cell, so that service interruption caused by an early or late cell change is effectively avoided when the user equipment performs the cell change.

Corresponding to the method, an embodiment of the present invention further provides a user equipment. As shown in FIG. 7, the user equipment includes:
a first determining unit 10, configured to determine a movement state of the user equipment;
a second determining unit 11, configured to determine a frequency priority order according to the movement state determined by the first determining unit 10, where: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
a measuring unit 12, configured to perform a frequency measurement according to the frequency priority order determined by the second determining unit 11; and
a processing unit 13, configured to perform a cell change according to the frequency priority order determined by the second determining unit 11 and a result of the frequency measurement performed by the measuring unit 12.

When performing a cell change, the user equipment provided in the embodiment of the present invention selects a frequency priority order according to a movement state of a user equipment; when the user equipment is in a high movement state, the user equipment preferentially changes to a cell with a wide coverage, and therefore, when the user equipment moves frequently, the user equipment will not leave the coverage of the cell easily, which effectively reduces the number of cell changes in the heterogeneous network, effectively reduces the power consumption of the user equipment, the network signaling load, and the data transmission delay, and enhances user experience. When the user equipment is in a low movement state, the user equipment preferentially changes to a cell with a small coverage, which effectively relieves the load of the cell with a wide coverage and enhances performance of the heterogeneous network.

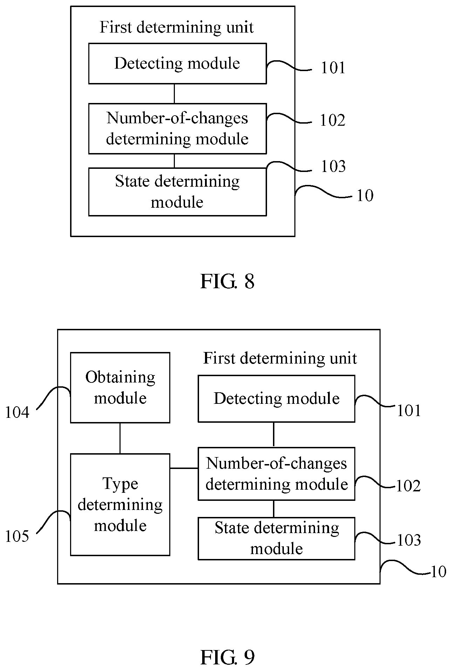

Further, to ensure accuracy of the movement state determined by the first determining unit 10, in an embodiment of the present invention, as shown in FIG. 8, the first determining unit 10 includes:
a detecting module 101, configured to detect the number of changes of the user equipment to each cell in the heterogeneous network in a specified time;
a number-of-changes determining module 102, configured to determine, according to a weight corresponding to each cell and the number of changes to each cell, which is detected by the detecting module 101, the number of cell changes of the user equipment in the specified time, where the weight corresponding to each cell is directly proportional to a size of the cell; and
a state determining module 103, configured to determine the movement state of the user equipment according to the number of cell changes, which is determined by the number-of-changes determining module 102.

Optionally, the number-of-changes determining module 102 may be specifically configured to determine, according to the weight corresponding to each cell, the number of changes to each cell, which is detected by the detecting module, and a cell type of a target cell, the number of cell changes of the user equipment in the specified time.

Further, to ensure accuracy of the movement state determined by the first determining unit 10, in another embodiment of the present invention, as shown in FIG. 9, the first determining unit 10 further includes:
an obtaining module 104, configured to obtain a physical cell identifier of the target cell for cell changing; and
a type determining module 105, configured to determine the cell type of the target cell according to the physical cell identifier of the target cell which is obtained by the obtaining module 104.

In this case, the number-of-changes determining module 102 is specifically configured to:
determine, according to the weight corresponding to each cell, the number of changes to each cell, which is detected by the detecting module 101, and the cell type of the target cell, which is determined by the type determining module 105, the number of cell changes of the user equipment in the specified time.

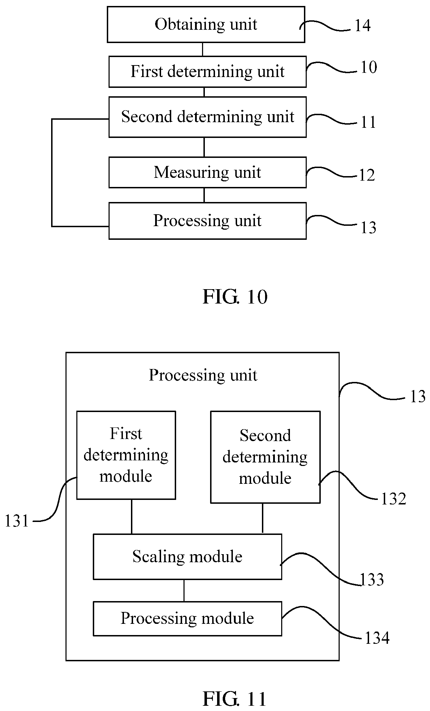

Further, as shown in FIG. 10, the user equipment further includes an obtaining unit 14, configured to: before the first determining unit 10 determines the movement state of the user equipment, obtain the weight corresponding to each cell in the heterogeneous network.

Optionally, the obtaining unit 14 may be specifically configured to receive a system message of each cell in the heterogeneous network, where the system message of each cell carries the weight corresponding to the cell; and obtain the weight corresponding to each cell in the heterogeneous network according to the system message of each cell in the heterogeneous network.

Optionally, the obtaining unit 14 may be specifically configured to receive a dedicated message of each cell in the heterogeneous network, where the dedicated message of each cell carries the weight corresponding to the cell; and obtain the weight corresponding to each cell in the heterogeneous network according to the dedicated message of each cell in the heterogeneous network.

Optionally, the obtaining unit 14 may be specifically configured to obtain the weight corresponding to each cell in the heterogeneous network according to pre-stored weight information.

Further, in an embodiment of the present invention, the obtaining unit 14 is configured to obtain a frequency priority order corresponding to each movement state, and the second determining unit 11 determines the frequency priority order according to the movement state determined by the first determining unit 10 and the frequency priority order corresponding to each movement state, which is obtained by the obtaining unit 14.

Optionally, the obtaining unit 14 may be specifically configured to receive a system message, where the system message carries frequency priority order information corresponding to each movement state; and obtain the frequency priority order corresponding to each movement state according to the system message.

Optionally, the obtaining unit 14 may be specifically configured to receive a dedicated message, where the dedicated message carries frequency priority order information corresponding to each movement state; and obtain the frequency priority order corresponding to each movement state according to the dedicated message.

Optionally, the obtaining unit 14 may be specifically configured to obtain the frequency priority order corresponding to each movement state according to pre-stored frequency priority order information.

Preferably, to reduce the number of frequency measurements, improve the efficiency of frequency measurements, and reduce power consumption of the user equipment effectively, the measuring unit 12 may be specifically configured to perform the frequency measurement according to the frequency priority order determined by the second determining unit 11 and the movement state of the user equipment, which is determined by the first determining unit 12.

Optionally, the measuring unit 12 may be specifically configured to:
when the movement state is the high movement state in which the number of cell changes in the specified time exceeds the first threshold,
if signal strength or signal quality of a current serving cell is greater than a first demarcation, measure at least one high-priority frequency in the heterogeneous network at intervals of a first specified time; and
if the signal strength or the signal quality of the current serving cell is less than the first demarcation, measure all frequencies in the heterogeneous network at intervals of the first specified time.

Optionally, the measuring unit 12 may be specifically configured to:
when the movement state is the low movement state in which the number of cell changes in the specified time is lower than the second threshold,
if signal strength or signal quality of a current serving cell is greater than a first demarcation,
measure at least one high-priority frequency in the heterogeneous network at intervals of a first specified time; and
if no cell is found at the at least one high-priority frequency in a second specified time, measure the at least one high-priority frequency at intervals of a third specified time, where the third specified time is greater than the first specified time;
measure the at least one high-priority frequency at intervals of the first specified time after at least one cell is found at the at least one high-priority frequency; and
if the signal strength or the signal quality of the current serving cell is less than the first demarcation, measure all frequencies in the heterogeneous network at intervals of the first specified time.

Further, to effectively avoid the problem of early or late cell changes of the user equipment in the heterogeneous network, in an embodiment of the present invention, as shown in FIG. 11, the processing unit 13 includes:
a first determining module 131, configured to determine a first scaling factor according to a cell size of the target cell for cell changing;
a second determining module 132, configured to determine a second scaling factor according to the determined movement state;
a scaling module 133, configured to scale, according to the determined first scaling factor and second scaling factor, a hysteresis used for cell changing; and
a processing module 134, configured to perform the cell change according to the frequency priority order, the result of the frequency measurement, and the scaled hysteresis.

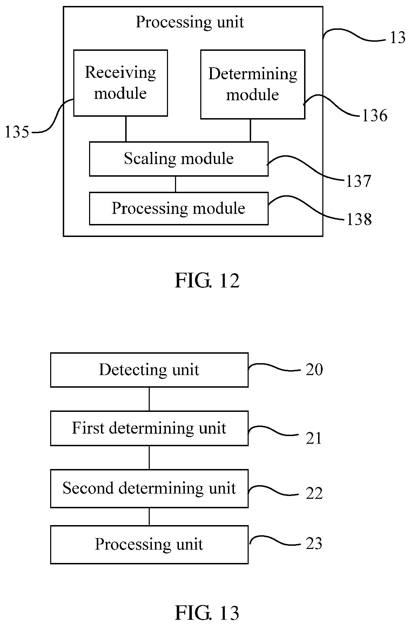

Further, to effectively avoid the problem of early or late cell changes of the user equipment in the heterogeneous network, in an embodiment of the present invention, as shown in FIG. 12, the processing unit 13 includes:
a receiving module 135, configured to receive a hysteresis used for cell changing from a current serving cell, where the hysteresis is obtained by the serving cell according to a size of the target cell for cell changing;
a determining module 136, configured to determine a scaling factor according to the determined movement state;
a scaling module 137, configured to scale the received hysteresis according to the determined scaling factor; and
a processing module 138, configured to perform the cell change according to the frequency priority order, the result of the frequency measurement, and the scaled hysteresis.

Corresponding to the method, an embodiment of the present invention further provides a user equipment. As shown in FIG. 13, the user equipment includes:
a detecting unit 20, configured to detect the number of changes of the user equipment to each cell in the heterogeneous network in a specified time;
a first determining unit 21, configured to determine, according to a weight corresponding to each cell and the number of changes to each cell, which is detected by the detecting unit 20, the number of cell changes of the user equipment in the specified time, where the weight corresponding to each cell is directly proportional to a size of the cell;
a second determining unit 22, configured to determine a movement state of the user equipment according to the determined number of cell changes; and
a processing unit 23, configured to perform a cell change according to the determined movement state.

The user equipment provided in the embodiment of the present invention determines the movement state of the user equipment according to the weight corresponding to each cell and the number of changes of the user equipment to each cell, and therefore, in determining the movement state of the user equipment, both the number of cell changes of the user equipment and the size of the target cell are taken into account. In this way, a true movement state of the user equipment can be reflected more accurately, so that service interruption caused by an early or late cell change is effectively avoided when the cell change is performed according to the movement state of the user equipment.

Optionally, the first determining unit 21 may be specifically configured to determine, according to the weight corresponding to each cell, the detected number of changes to each cell, and a cell type of a target cell, the number of cell changes of the user equipment in the specified time.

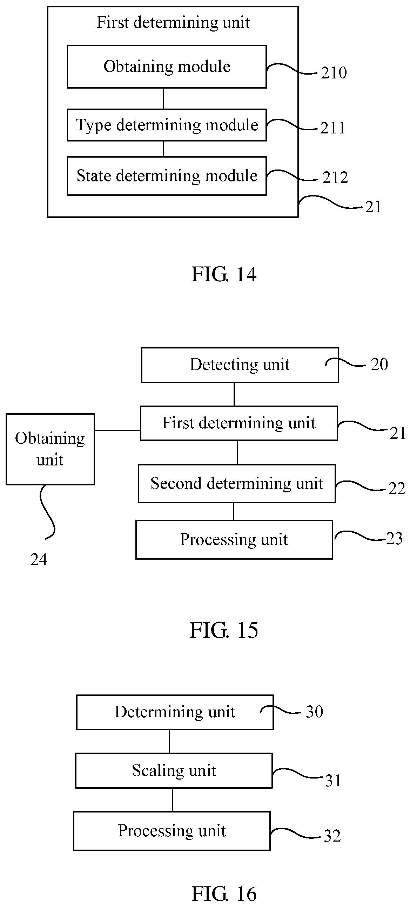

In an embodiment of the present invention, as shown in FIG. 14, the first determining unit 21 specifically includes:
an obtaining module 210, configured to obtain a physical cell identifier of the target cell for cell changing;
a type determining module 211, configured to determine the cell type of the target cell according to the physical cell identifier of the target cell; and
a number-of-changes determining module 212, configured to determine, according to the weight corresponding to each cell, the number of changes to each cell, which is detected by the detecting unit 20, and the cell type of the target cell, which is determined by the type determining module 211, the number of cell changes of the user equipment in the specified time.

Further, in an embodiment of the present invention, as shown in FIG. 15, the user equipment further includes an obtaining unit 24, configured to obtain the weight corresponding to each cell in the heterogeneous network.

Optionally, the obtaining unit 24 may be specifically configured to receive a system message of each cell in the heterogeneous network, where the system message of each cell carries the weight corresponding to the cell; and obtain the weight corresponding to each cell in the heterogeneous network according to the system message of each cell in the heterogeneous network.

Optionally, the obtaining unit 24 may be specifically configured to receive a dedicated message of each cell in the heterogeneous network, where the dedicated message of each cell carries the weight corresponding to the cell; and obtain the weight corresponding to each cell in the heterogeneous network according to the dedicated message of each cell in the heterogeneous network.

Optionally, the obtaining unit 24 may be specifically configured to obtain the weight corresponding to each cell in the heterogeneous network according to pre-stored weight information.

Corresponding to the method, an embodiment of the present invention provides a user equipment. As shown in FIG. 16, the user equipment includes:
a determining unit 30, configured to determine a movement state of the user equipment;
a scaling unit 31, configured to scale, according to the movement state determined by the determining unit 30 and a size of a target cell for cell changing, a hysteresis used for cell changing; and
a processing unit 32, configured to perform a cell change according to the hysteresis scaled by the scaling unit 31.

According to the user equipment provided in the embodiment of the present invention, the hysteresis used for cell changing is scaled according to the movement state of the user equipment and the size of the target cell for cell changing. Therefore, the scaled hysteresis can be adapted to the movement state of the user equipment and the size of the target cell, so that service interruption caused by an early or late cell change is effectively avoided when the user equipment performs the cell change.

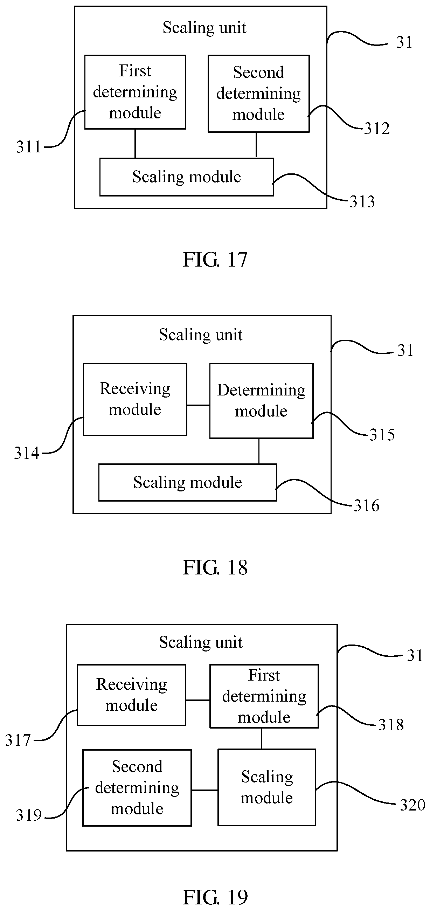

Optionally, in an embodiment of the present invention, as shown in FIG. 17, the scaling unit 31 specifically includes:
a first determining module 311, configured to determine a first scaling factor according to the size of the target cell for cell changing;
a second determining module 312, configured to determine a second scaling factor according to the movement state determined by the determining unit 30;
a scaling module 313, configured to scale, according to the first scaling factor determined by the first determining module 311 and the second scaling factor determined by the second determining module 312, the hysteresis used for cell changing.

Optionally, in an embodiment of the present invention, as shown in FIG. 18, the scaling unit 31 specifically includes:
a receiving module 314, configured to receive a hysteresis used for cell changing from a current serving cell, where the hysteresis is obtained by the serving cell according to the size of the target cell for cell changing;
a determining module 315, configured to determine a scaling factor according to the movement state determined by the determining unit 30; and
a scaling module 316, configured to scale, according to the scaling factor determined by the determining module 315, the hysteresis received by the receiving module.

Optionally, in an embodiment of the present invention, as shown in FIG. 19, the scaling unit 31 specifically includes:
a receiving module 317, configured to receive at least one hysteresis sent by a current serving cell, where each hysteresis corresponds to a cell size;
a first determining module 318, configured to determine, according to the size of the target cell for cell changing, a hysteresis corresponding to the target cell in the hystereses received by the receiving module 317;
a second determining module 319, configured to determine a scaling factor according to the movement state determined by the determining unit 30; and
a scaling module 320, configured to scale, according to the scaling factor determined by the second determining module 319, the hysteresis determined by the first determining module 318.

Further embodiments of the present invention are provided in the following. It should be noted that the numbering used in the following section does not necessarily need to comply with the numbering used in the previous sections.
Embodiment 1. A method for cell changing in a heterogeneous network, comprising:
   determining a movement state of a user equipment;
   determining a frequency priority order according to the determined movement state, wherein: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
   performing a frequency measurement according to the determined frequency priority order; and
   performing a cell change according to the determined frequency priority order and a result of the frequency measurement.
Embodiment 2. The method according to embodiment 1, wherein:
   the determining a movement state of a user equipment comprises:
   detecting the number of changes of the user equipment to each cell in the heterogeneous network in a specified time;
   determining, according to a weight corresponding to each cell and the detected number of changes to each cell, the number of its own cell changes in the specified time, wherein the weight corresponding to each cell is directly proportional to a size of the cell; and
   determining a movement state of a user equipment according to the determined number of cell changes.
Embodiment 3. The method according to embodiment 2, wherein:
   the determining, according to a weight corresponding to each cell and the detected number of changes to each cell, the number of its own cell changes in the specified time comprises:
   determining, according to the weight corresponding to each cell, the detected number of changes to each cell, and a cell type of a target cell, the number of its own cell changes in the specified time.
Embodiment 4. The method according to embodiment 3, wherein the method further comprises:
   obtaining a physical cell identifier of a target cell for cell changing; and
   determining the cell type of the target cell according to the physical cell identifier of the target cell.
Embodiment 5. The method according to embodiment 2, 3, or 4, wherein, before the determining a movement state of a user equipment, the method further comprises: obtaining the weight corresponding to each cell in the heterogeneous network; and
   the obtaining the weight corresponding to each cell in the heterogeneous network comprises:
   receiving a system message of each cell in the heterogeneous network, wherein the system message of each cell carries the weight corresponding to the cell; and
   obtaining the weight corresponding to each cell in the heterogeneous network according to the system message of each cell in the heterogeneous network;
   or
   receiving a dedicated message of each cell in the heterogeneous network, wherein the dedicated message of each cell carries the weight corresponding to the cell; and
   obtaining the weight corresponding to each cell in the heterogeneous network according to the dedicated message of each cell in the heterogeneous network;
   or
   obtaining the weight corresponding to each cell in the heterogeneous network according to pre-stored weight information.
Embodiment 6. The method according to any one of embodiments 1 to 4, wherein:
   before the determining a frequency priority order according to the detected movement state, the method further comprises:
   obtaining a frequency priority order corresponding to each movement state.
Embodiment 7. The method according to embodiment 6, wherein:
   the obtaining a frequency priority order corresponding to each movement state comprises:
   receiving a system message, wherein the system message carries frequency priority order information corresponding to each movement state; and
   obtaining the frequency priority order corresponding to each movement state according to the system message;
   or
   receiving a dedicated message, wherein the dedicated message carries frequency priority order information corresponding to each movement state; and
   obtaining the frequency priority order corresponding to each movement state according to the dedicated message;
   or
   obtaining the frequency priority order corresponding to each movement state according to pre-stored frequency priority order information.
Embodiment 8. The method according to embodiment 1, 2, 3, 4, or 7, wherein the performing a frequency measurement according to the determined frequency priority order comprises:
   performing the frequency measurement according to the determined frequency priority order and the determined movement state.
Embodiment 9. The method according to embodiment 8, wherein the performing the frequency measurement according to the determined frequency priority order and the determined movement state comprises:
   when the movement state is the high movement state in which the number of cell changes in the specified time exceeds the first threshold,
   if signal strength or signal quality of a current serving cell is greater than a first demarcation, measuring at least one high-priority frequency in the heterogeneous network at intervals of a first specified time; and
   if the signal strength or the signal quality of the current serving cell is less than the first demarcation, measuring all frequencies in the heterogeneous network at intervals of the first specified time;
   or
   when the movement state is the low movement state in which the number of cell changes in the specified time is lower than the second threshold,
   if signal strength or signal quality of a current serving cell is greater than a first demarcation,
   measuring at least one high-priority frequency in the heterogeneous network at intervals of a first specified time;
   if no cell is found at the at least one high-priority frequency in a second specified time, measuring the at least one high-priority frequency at intervals of a third specified time, wherein the third specified time is greater than the first specified time;
   after at least one cell is found at the at least one high-priority frequency, measuring the at least one high-priority frequency at intervals of the first specified time; and
   if the signal strength or the signal quality of the current serving cell is less than the first demarcation, measuring all frequencies in the heterogeneous network at intervals of the first specified time.
Embodiment 10. The method according to embodiment 1, 2, 3, 4, 7, or 9, wherein:
   the method further comprises:
   determining a first scaling factor according to a cell size of the target cell for cell changing;
   determining a second scaling factor according to the determined movement state; and
   scaling, according to the determined first scaling factor and second scaling factor, a hysteresis used for cell changing; and
   the performing a cell change according to the frequency priority order and a result of the frequency measurement comprises:
      performing the cell change according to the frequency priority order, the result of the frequency measurement, and the scaled hysteresis.
Embodiment 11. The method according to embodiment 1, 2, 3, 4, 7, or 9, wherein the method further comprises:
   receiving a hysteresis used for cell changing from a current serving cell, wherein the hysteresis is obtained by the serving cell according to a size of the target cell for cell changing;
   determining a scaling factor according to the determined movement state; and
   scaling the received hysteresis according to the determined scaling factor; and
   the performing a cell change according to the frequency priority order and a result of the frequency measurement comprises:
      performing the cell change according to the frequency priority order, the result of the frequency measurement, and the scaled hysteresis.
Embodiment 12. A method for cell changing in a heterogeneous network, comprising:
   detecting the number of changes of the user equipment to each cell in the heterogeneous network in a specified time;
   determining, according to a weight corresponding to each cell and the detected number of changes to each cell, the number of its own cell changes in the specified time, wherein the weight corresponding to each cell is directly proportional to a size of the cell;
   determining a movement state of a user equipment according to the determined number of cell changes; and
   performing a cell change according to the determined movement state.
Embodiment 13. The method according to embodiment 12, wherein:
   the determining, according to a weight corresponding to each cell and the detected number of changes to each cell, the number of its own cell changes in the specified time comprises:
   determining, according to the weight corresponding to each cell, the detected number of changes to each cell, and a cell type of a target cell, the number of its own cell changes in the specified time.
Embodiment 14. The method according to embodiment 12, wherein the method further comprises:
   obtaining a physical cell identifier of a target cell for cell changing; and
   determining a cell type of the target cell according to the physical cell identifier of the target cell.
Embodiment 15. The method according to embodiment 12, 13, or 14, wherein, before the determining a movement state of a user equipment, the method further comprises: obtaining the weight corresponding to each cell in the heterogeneous network; and
   the obtaining the weight corresponding to each cell in the heterogeneous network comprises:
   receiving a system message of each cell in the heterogeneous network, wherein the system message of each cell carries the weight corresponding to the cell; and
   obtaining the weight corresponding to each cell in the heterogeneous network according to the system message of each cell in the heterogeneous network;
   or
   receiving a dedicated message of each cell in the heterogeneous network, wherein the dedicated message of each cell carries the weight corresponding to the cell; and
   obtaining the weight corresponding to each cell in the heterogeneous network according to the dedicated message of each cell in the heterogeneous network;
   or
   obtaining the weight corresponding to each cell in the heterogeneous network according to pre-stored weight information.
Embodiment 16. A method for cell changing in a heterogeneous network, comprising:
   determining a movement state of a user equipment;
   scaling, according to the determined movement state and a size of a target cell for cell changing, a hysteresis used for cell changing; and
   performing a cell change according to the scaled hysteresis.
Embodiment 17. The method according to embodiment 16, wherein the scaling, according to the determined movement state and a size of a target cell for cell changing, a hysteresis used for cell changing comprises:
   determining a first scaling factor according to the size of the target cell for cell changing;
   determining a second scaling factor according to the determined movement state; and
   scaling, according to the determined first scaling factor and second scaling factor, the hysteresis used for cell changing.
Embodiment 18. The method according to embodiment 16, wherein the scaling, according to the determined movement state and a size of a target cell for cell changing, a hysteresis used for cell changing comprises:
   receiving a hysteresis used for cell changing from a current serving cell, wherein the hysteresis is obtained by the serving cell according to the size of the target cell for cell changing;
   determining a scaling factor according to the determined movement state;
   scaling the received hysteresis according to the determined scaling factor; and
   performing the cell change according to the scaled hysteresis.
Embodiment 19. The method according to embodiment 16, wherein the scaling, according to the determined movement state and a size of a target cell for cell changing, a hysteresis used for cell changing comprises:
   receiving at least one hysteresis sent by a current serving cell, wherein each hysteresis corresponds to a cell size;
   determining a hysteresis corresponding to the target cell in the received hysterese according to the size of the target cell for cell changing;
   determining a scaling factor according to the determined movement state; and
   scaling the determined hysteresis according to the determined scaling factor.
Embodiment 20. A user equipment, comprising:
   a first determining unit, configured to determine a movement state of the user equipment;
   a second determining unit, configured to determine a frequency priority order according to the movement state determined by the first determining unit, wherein: when the movement state is a high movement state in which the number of cell changes in a specified time exceeds a first threshold, a priority of a frequency used by a cell with a wide coverage in the heterogeneous network is higher than a priority of a frequency used by a cell with a small coverage, and, when the movement state is a low movement state in which the number of cell changes in a specified time is lower than a second threshold, a priority of a frequency used by a cell with a wide coverage in the heterogeneous network is lower than a priority of a frequency used by a cell with a small coverage;
   a measuring unit, configured to perform a frequency measurement according to the frequency priority order determined by the second determining unit; and
   a processing unit, configured to perform a cell change according to the frequency priority order determined by the second determining unit and a result of the frequency measurement performed by the measuring unit.
Embodiment 21. The user equipment according to embodiment 20, wherein the first determining unit comprises:
   a detecting module, configured to detect the number of changes of the user equipment to each cell in the heterogeneous network in a specified time;
   a number-of-changes determining module, configured to determine, according to a weight corresponding to each cell and the number of changes to each cell, which is detected by the detecting module, the number of cell changes of the user equipment in the specified time, wherein the weight corresponding to each cell is directly proportional to a size of the cell; and
   a state determining module, configured to determine the movement state of the user equipment according to the number of cell changes, which is determined by the number-of-changes determining module.
Embodiment 22. The user equipment according to embodiment 21, wherein:
   the number-of-changes determining module is specifically configured to:
   determine, according to the weight corresponding to each cell, the number of changes to each cell, which is detected by the detecting module, and a cell type of a target cell, the number of cell changes of the user equipment in the specified time.
Embodiment 23. The user equipment according to embodiment 22, wherein:
   the first determining unit further comprises:
   an obtaining module, configured to obtain a physical cell identifier of the target cell for cell changing; and
   a type determining module, configured to determine the cell type of the target cell according to the physical cell identifier of the target cell.
Embodiment 24. The user equipment according to embodiment 21, 22, or 23, wherein the user equipment further comprises an obtaining unit, configured to:
   before the first determining unit determines the movement state of the user equipment, receive a system message of each cell in the heterogeneous network, wherein the system message of each cell carries the weight corresponding to the cell; and obtain the weight corresponding to each cell in the heterogeneous network according to the system message of each cell in the heterogeneous network;
   or
   before the first determining unit determines the movement state of the user equipment, receive a dedicated message of each cell in the heterogeneous network, wherein the dedicated message of each cell carries the weight corresponding to the cell; and obtain the weight corresponding to each cell in the heterogeneous network according to the dedicated message of each cell in the heterogeneous network;
   or
   before the first determining unit determines the movement state of the user equipment, obtain the weight corresponding to each cell in the heterogeneous network according to pre-stored weight information.
Embodiment 25. The user equipment according to any one of embodiments 20 to 23, further comprising an obtaining unit, configured to obtain a frequency priority order corresponding to each movement state before the second determining unit determines the frequency priority order.
Embodiment 26. The user equipment according to embodiment 25, wherein:
   the obtaining unit is specifically configured to:
   receive a system message, wherein the system message carries frequency priority order information corresponding to each movement state; and obtain the frequency priority order corresponding to each movement state according to the system message;
   or
   receive a dedicated message, wherein the dedicated message carries frequency priority order information corresponding to each movement state; and obtain the frequency priority order corresponding to each movement state according to the dedicated message;
   or
   obtain the frequency priority order corresponding to each movement state according to pre-stored frequency priority order information.
Embodiment 27. The user equipment according to embodiment 20, 21, 22, 23, or 26, wherein the measuring unit is specifically configured to:
   perform the frequency measurement according to the frequency priority order determined by the second determining unit and the movement state of the user equipment, which is determined by the first determining unit.
Embodiment 28. The user equipment according to embodiment 27, wherein the measuring unit is specifically configured to:
   when the movement state is the high movement state in which the number of cell changes in the specified time exceeds the first threshold,
   if signal strength or signal quality of a current serving cell is greater than a first demarcation, measure at least one high-priority frequency in the heterogeneous network at intervals of a first specified time; and
   if the signal strength or the signal quality of the current serving cell is less than the first demarcation, measure all frequencies in the heterogeneous network at intervals of the first specified time;
   or
   when the movement state is the low movement state in which the number of cell changes in the specified time is lower than the second threshold,
   if signal strength or signal quality of a current serving cell is greater than a first demarcation,
   measure at least one high-priority frequency in the heterogeneous network at intervals of a first specified time; and
   if no cell is found at the at least one high-priority frequency in a second specified time, measure the at least one high-priority frequency at intervals of a third specified time, wherein the third specified time is greater than the first specified time;
   measure the at least one high-priority frequency at intervals of the first specified time after at least one cell is found at the at least one high-priority frequency; and
   if the signal strength or the signal quality of the current serving cell is less than the first demarcation, measure all frequencies in the heterogeneous network at intervals of the first specified time.
Embodiment 29. The user equipment according to embodiment 20, 21, 22, 23, 26, or 28, wherein the processing unit comprises:
   a first determining module, configured to determine a first scaling factor according to a cell size of the target cell for cell changing;
   a second determining module, configured to determine a second scaling factor according to the determined movement state;
   a scaling module, configured to scale, according to the determined first scaling factor and second scaling factor, a hysteresis used for cell changing; and
   a processing module, configured to perform the cell change according to the frequency priority order, the result of the frequency measurement, and the scaled hysteresis.
Embodiment 30. The user equipment according to embodiment 20, 21, 22, 23, 26, or 28, wherein the processing unit comprises:
   a receiving module, configured to receive a hysteresis used for cell changing from a current serving cell, wherein the hysteresis is obtained by the serving cell according to a size of the target cell for cell changing;
   a determining module, configured to determine a scaling factor according to the determined movement state;
   a scaling module, configured to scale the received hysteresis according to the determined scaling factor; and
   a processing module, configured to perform the cell change according to the frequency priority order, the result of the frequency measurement, and the scaled hysteresis.
Embodiment 31. A user equipment, comprising:
   a detecting unit, configured to detect the number of changes of the user equipment to each cell in the heterogeneous network in a specified time;
   a first determining unit, configured to determine, according to a weight corresponding to each cell and the number of changes to each cell, which is detected by the detecting unit, the number of cell changes of the user equipment in the specified time, wherein the weight corresponding to each cell is directly proportional to a size of the cell;
   a second determining unit, configured to determine a movement state of the user equipment according to the determined number of cell changes; and
   a processing unit, configured to perform a cell change according to the determined movement state.
Embodiment 32. The user equipment according to embodiment 31, wherein the first determining unit is specifically configured to:
   determine, according to the weight corresponding to each cell, the detected number of changes to each cell, and a cell type of a target cell, the number of cell changes of the user equipment in the specified time.
Embodiment 33. The user equipment according to embodiment 32, wherein the first determining unit comprises:
   an obtaining module, configured to obtain a physical cell identifier of the target cell for cell changing;
   a type determining module, configured to determine the cell type of the target cell according to the physical cell identifier of the target cell; and
   a number-of-changes determining module, configured to determine, according to the weight corresponding to each cell, the number of changes to each cell, which is detected by the detecting unit, and the cell type of the target cell, which is determined by the type determining module, the number of cell changes of the user equipment in the specified time.
Embodiment 34. The user equipment according to embodiment 31, 32, or 33, further comprising an obtaining unit, configured to:
   receive a system message of each cell in the heterogeneous network, wherein the system message of each cell carries the weight corresponding to the cell; and obtain the weight corresponding to each cell in the heterogeneous network according to the system message of each cell in the heterogeneous network;
   or
   receive a dedicated message of each cell in the heterogeneous network, wherein the dedicated message of each cell carries the weight corresponding to the cell; and obtain the weight corresponding to each cell in the heterogeneous network according to the dedicated message of each cell in the heterogeneous network;
   or
   obtain the weight corresponding to each cell in the heterogeneous network according to pre-stored weight information.
Embodiment 35. A user equipment, comprising:
   a determining unit, configured to determine a movement state of the user equipment;
   a scaling unit, configured to scale, according to the movement state determined by the determining unit and a size of a target cell for cell changing, a hysteresis used for cell changing; and
   a processing unit, configured to perform a cell change according to the hysteresis scaled by the scaling unit.
Embodiment 36. The user equipment according to embodiment 35, wherein the scaling unit comprises:
   a first determining module, configured to determine a first scaling factor according to the size of the target cell for cell changing;
   a second determining module, configured to determine a second scaling factor according to the movement state determined by the determining unit; and
   a scaling module, configured to scale, according to the first scaling factor determined by the first determining module and the second scaling factor determined by the second determining module, the hysteresis used for cell changing.
Embodiment 37. The user equipment according to embodiment 35, wherein the scaling unit comprises:
   a receiving module, configured to receive a hysteresis used for cell changing from a current serving cell, wherein the hysteresis is obtained by the serving cell according to the size of the target cell for cell changing;
   a determining module, configured to determine a scaling factor according to the movement state determined by the determining unit; and
   a scaling module, configured to scale, according to the determined scaling factor, the hysteresis received by the receiving module.
Embodiment 38. The user equipment according to embodiment 35, wherein the scaling unit comprises:
   a receiving module, configured to receive at least one hysteresis sent by a current serving cell, wherein each hysteresis corresponds to a cell size;
   a first determining module, configured to determine, according to the size of the target cell for cell changing, a hysteresis corresponding to the target cell in the hystereses received by the receiving module;
   a second determining module, configured to determine a scaling factor according to the movement state determined by the determining unit; and
   a scaling module, configured to scale, according to the scaling factor determined by the second determining module, the hysteresis determined by the first determining module.

A person of ordinary skill in the art should understand that, all or a part of the processes of the foregoing method embodiments may be implemented by a computer program instructing relevant hardware. The program may be stored in a computer readable storage medium. When the program runs, the steps of the foregoing method embodiments are performed. The storage medium includes any medium that is capable of storing program codes, such as a ROM, a RAM, a magnetic disk, an optical disk, or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, comprising:
determining, by a terminal device, a movement state of the user equipment;
determining, by the terminal device, a hysteresis according to the movement state of the user equipment, and the hysteresis is related to the movement state of the user equipment; and
performing, by the terminal device, cell reselect according to the hysteresis.

2. The method according to claim 1, wherein determining, by the terminal device, a hysteresis according to the movement state of the user equipment comprises:
scaling, by the terminal device, a hysteresis according to the movement state of the user equipment.

3. The method according to claim 1 or 2, wherein the method further comprises:
receiving, by the terminal device, one or more hysteresis, wherein each hysteresis is related to size of a kind of cell.

4. The method according to claim 3, wherein scaling, by the terminal device, a hysteresis according to the movement state of the user equipment comprises:
determining, by the terminal device, a scaling factor according to the movement state of the user equipment; and
scaling, by the terminal device, the hysteresis according to the scaling factor.

5. The method according to claim 3 wherein scaling, by the terminal device, a hysteresis according to the movement state of the user equipment comprises:
determining, by the terminal device, a hysteresis corresponding to a target cell from the more hysteresis on which cell reselection is performed, according to a size of the target cell for cell reselection;
determining, by the terminal device, a scaling factor according to the determined movement state; and
scaling, by the terminal device, a hysteresis according to the scaling factor.

6. The method according to any one of claims 1 to 5, wherein the movement state comprises any one of high movement state, medium movement state and low movement state.

7. A communication method, comprising:
determining, by a network device, one or more hysteresis, and each hysteresis is related to size of a kind of cell;
sending, by the terminal device, the one or more hysteresis to a terminal device.

8. The method according to claim 7, wherein determining, by a network device, one or more hysteresis, and each hysteresis is related to size of a kind of cell comprises:
determining, by the network device, one or more sizes of target cells for a next reselection of the user equipment;
determining, by the network device, a hysteresis to each target cell according to the one or more sizes of the target cells; and
sending, by the network device, the hysteresis to the user equipment.

9. The method according to claim 7 or 8, wherein the movement state comprises any one of high movement state, medium movement state and low movement state.

10. An apparatus configured for implementing the method of any one of claims 1 to 6.

11. An apparatus configured for implementing the method of any one of claims 7 to 9

12. A computer-readable storage medium comprising instructions which, when executed by a computer, cause the computer to carry out the method of any one of claims 1 to 6.

13. A computer-readable storage medium comprising instructions which, when executed by a computer, cause the computer to carry out the method of any one of claims 7 to 9.
